# EUROPEAN PATENT SPECIFICATION

(11) **EP 2 873 587 B1**
(45) Date of publication and mention of the grant of the patent: **24.08.2016**
(21) Application number: 13753709.8
(22) Date of filing: 15.07.2013
(51) Int. Cl.: B62B 5/06, B62B 1/00, B62B 1/12

(54) **WHEELED BASKET**
KORB MIT RÄDERN
PANIER AVEC DES ROUES

(30) Priority: 13.07.2012 PT 2012106442
(43) Date of publication of application: 20.05.2015
(73) Proprietor: Handgo Unipessoal Lda., Póvoa de Varzim (PT)
(72) Inventor: DUARTE ALVES, Manuel Joaquim, Póvoa de Varzim (PT); ALVES PEREIRA, Teresa, Póvoa de Varzim (PT)
(74) Representative: Pereira da Cruz, Joao
(86) International application number: PCT/PT2013/000046
(87) International publication number: WO 2014/011069

(56) References cited:
- EP-A1- 1 564 105
- DE-A1-102004 009 131
- DE-A1-102009 039 129
- DE-U1- 7 809 844
- FR-A1- 2 906 212
- US-A1- 2005 029 762

## Description

### Field of the invention

The present invention relates to a shopping cart particularly to a wheeled cart for personal use in sales areas, usually in supermarkets and hypermarkets and other retail outlets.

### Technical Background

In these places it is usual to see baskets with wheels of various shapes and designs, some with two or more wheels. These baskets are usually endowed with essentially two types of handles, one 'rotating' handle and one 'telescopic pulling' handle. These telescopic handles are adaptations of traditional luggage bags with complex mechanisms or just consist in a pull handle which locks in its upper position by simple friction means, that is to say the handle is compressed between two plastic walls of the basket.

These baskets are already known from WO 2006/056627 required for Araven SA, and patent application FR 2,906,212 required for Joalpe SA.

The patent application WO 2006/056627 relates to a generally parallelepiped basket usable in large areas whose walls are provided with openings, this basket comprising a pivoting handle, a telescopic handle, a pair of wheels which ensures its movement, such wheels being housed in the space defined by two L-shaped elements arranged near the vertices of the bottom of the parallelepiped basket, when stacking the baskets.

Patent application FR 2,906,212 also relates to a basket for big sales areas which has the general characteristics of this type of equipment such as having a substantially parallelepiped shape, being stackable, having openings in its body walls and means allowing it to move, and being provided with pivoting handles. It is essentially characterized in that the gripping means of said basket consists of a telescopic arm whose attachment takes place by innovative means.

The utility model application DE 7809844 discloses a foldable trolley, specifically for luggage, with at least one telescopically extendable handle, provided with a handle grip, in which a tubular section provides holes near one of its ends, which accommodate partly brakes.

The patent application US2005029762 discloses a combined golf bag and golf cart. A support mechanism thereof comprises a lower support tube, an abutment tube, two link arms, a lower coupling tube, an upper support tube, a sliding tube, an upper coupling tube, and a retractable handle assembly. A pressing of a push button by a finger of one hand grasping a handle will unlock a wheel assembly for extending wheels outwardly prior to transporting along a playing field.

The disadvantage of those prior art baskets, and more particularly of their handle systems relates to the adaptation of luggage bag systems with its complex mechanism which has too many parts including springs and has, in daily use in a retail outlet environment, a high failure probability affecting the basket usefulness. In the case of friction handles pulled between walls compressing them, daily use and the use at full load causes a great wear in the components which therefore become globally slack causing the telescopic handle not to be fixed in its upper working position.

### Summary of the invention

Present invention relates to a basket whose main characteristics are specified in claim 1. Other characteristics are also referred in dependent claims.

The object of the present invention is a basket with a simple configuration which remains in a fixed position when the telescopic handle moves upward and is unlocked when pushed down.

Moreover, as there is nowadays great concern and awareness about the importance of hygiene in an attempt to prevent and control the spread of certain bacteria, especially at locations of high physical contact, top-of-the-range supermarkets are now making available disinfecting wipes, so that customers can clean the handles of shopping carts, baskets, etc. It is therefore an object of the invention to provide the telescopic lifting set with a part separate from the handle, so that during manufacturing this part can be made with an antibacterial additive, thereby helping to prevent bacterial growth in these environments.

Since this antibacterial additive is very expensive, it would be very expensive to produce the whole set with this additive. So only the handle part where this contact is more frequent is made with this additive, thus making it more economical.

On the other hand, retailers and international brands are increasingly investing in advertising within the stores and are very aware of their trademark or their logos. The vast majority of logos is printed or hot-transferred directly onto the body of the basket, or by applying labels on the basket or in-mold labeling (IML). As the printed part has no protection, the wear, tear and contact with other surfaces will, over the time, damage the printed area, and the trademark or logo looks bad contributing to a negative impression of those trademark or logo.

It is therefore another object of the invention to provide the basket with a transparent coupling panel which fits over the front upper rim of the basket and so protecting the printing on the rim, or which has the logo or trademark printed on the rear part of the transparent panel thereby protecting the printing and being possible to replace quickly when damaged, without needing to replace the basket as a whole. This can help the retailer to have different sales promotions with different brands at minimal cost.

Yet another positive aspect is that, when stacked, each basket front panel will contribute to a more effective sales promotion.

The constant daily use causes wear and tear on the basket wheels and dirt begins to accumulate between axle and wheel, thus contributing to less mobility and making it harder to move the basket when it is heavily loaded. Maintenance is required which can be costly, and it may even be necessary to replace the whole basket. It is therefore another object of the invention to use a steel or plastic shaft which will keep the wheel in place. This shaft has a groove, or a portion of the shaft has a smaller diameter, and is kept in place by a downward force on that part of the basket acting as a spring. This force can be easily released by pressing the spring part of the basket, releasing the shaft and the wheel for an easier maintenance and cleaning or for replacement of the wheel.

### Brief description of the drawings

The following description is based on the accompanying drawings which represent without any limitation the basket with wheels object of the invention. In the drawings:

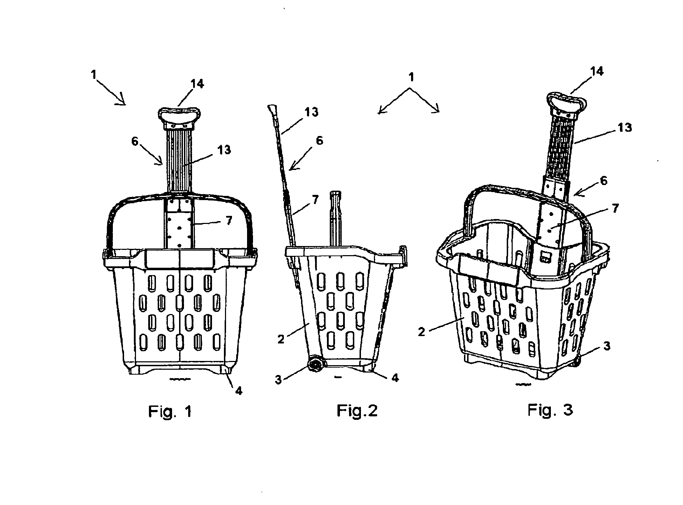

- Fig. 1 is a front view of the basket with wheels of the invention;
- Fig. 2 is a side view of the basket shown in Fig. 1;
- Fig. 3 is a perspective view of the basket of previous Figs;

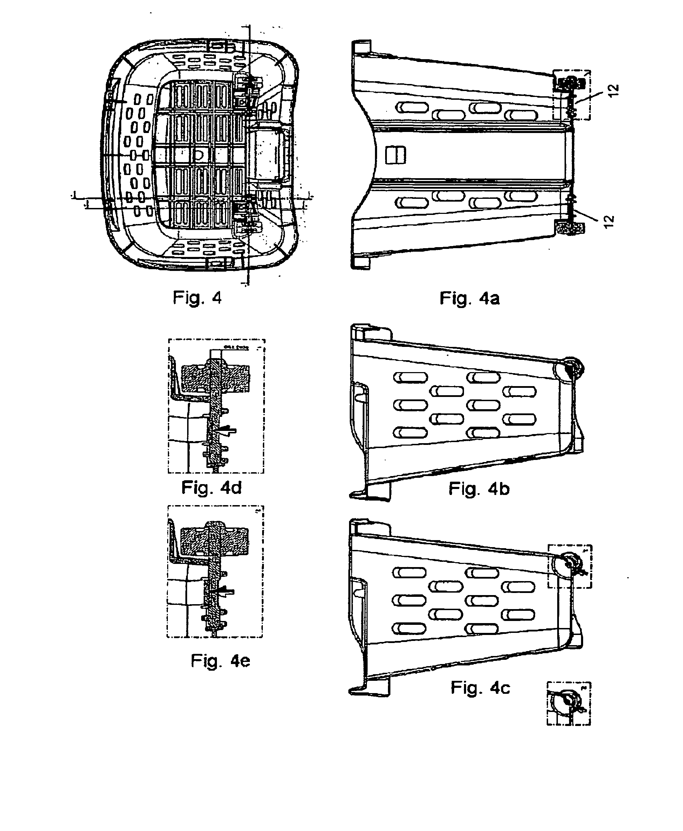

- Fig. 4 is a top view of the cart of previous Figs. and their sections along lines A-A (Fig. 4a), B-B (Fig. 4b), C-C (Fig. 4c), and enlarged details (Figs. 4d and 4e) of the moving means respectively of Figs. 4a and 4c;

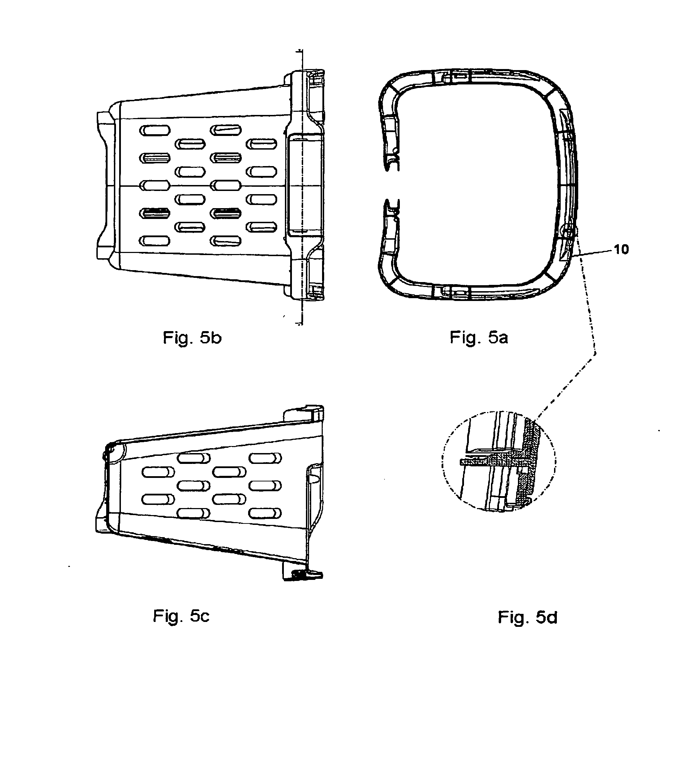

- Fig. 5 shows the above, front and side views respectively in a, b, c and d of the basket of the invention where the advertising element is represented;
- Fig. 6 shows the above, front and side views and enlarged detail view respectively in a, b, c and d of the basket with details of the telescopic set;

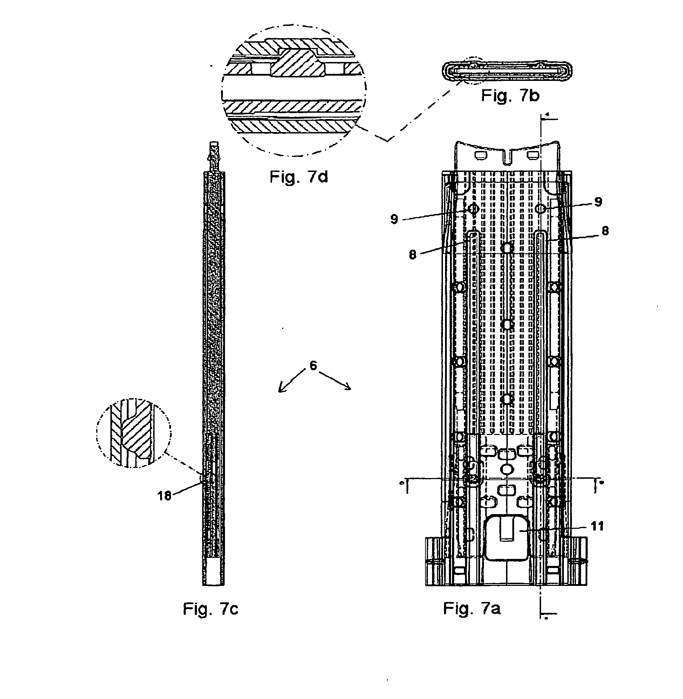

- Fig. 7 shows the front, above and side views respectively in a, b, c and d of the telescopic set; and
- Fig. 8 shows views of the basket of the invention with details of the lower brake operation respectively in a, b, c and d.

### Detailed description of the invention

As can be seen in the figures, the basket 1 is formed by a body 2 of plastic material, substantially parallelepiped formed by four walls with openings and moving means comprising two wheels 3 and, on the opposite side of the wheels, supporting means 4 to the ground to ensure stability when at rest. It is also part of the basket a rotating handle/grip 5 which lies on the upper rim of the basket and a telescopic set 6.

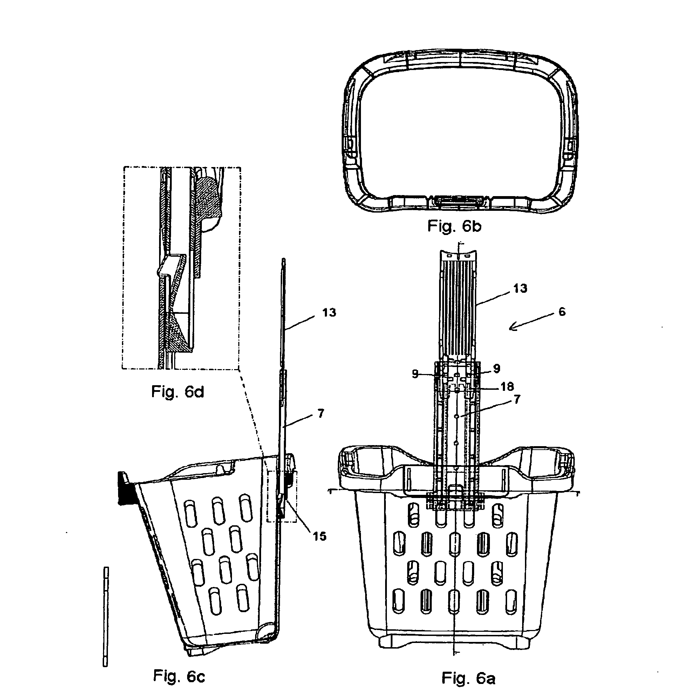

Specifically, the present invention includes a basket (1) with wheels (3) of the type which is normally used for purchases at supermarkets and other retail outlets, being stackable and provided with a telescopic handle, characterized in that it comprises:
- a telescopic set (6) suitable to drive a handle (14) comprised by:
   - a main tubular section (7) or structure with rectangular inner grooves (8) along most of its length and presenting holes (9) near one end of said main tubular section (7) suitable for accommodating and receiving part of one 'upper brake';
   - a reinforced rectangular section (13) suitable for moving inside the main tubular section (7) and which includes said upper brake consisting of projecting ledges (18) on both sides of a lower part of the reinforced rectangular section (13), having the handle (14) at its top;
- a portion of said handle (14) made with an antibacterial additive;
- a transparent coupling panel (10) which fits over a front upper rim of the basket;
- a steel or plastic shaft (12) which keeps a wheel in place, wherein this shaft has a groove or a portion of the shaft has a smaller diameter, and is suitable for being kept in place by a downward force on that part of the basket acting as a spring, wherein this force can be released by pressure to release the shaft and the wheel;
wherein,
responsive to a continuing upward pull of the rectangular reinforced section (13) with the upper brake fixed at its position, the ledges (18) laterally projecting in the lower part of the wall of the rectangular reinforced section (13) are adapted to move inside the deeper rectangular grooves of the main tubular section (7). Said telescopic set generally shown by reference number **6** consists of:
- A main tubular section **7** or structure with rectangular inner grooves **8** along most of its length and presenting holes **9** near one end of the tubular section **7** which will accommodate and receive part of the 'upper brake'. The tubular section has cutouts and holes **11** at the opposite end to receive the 'lower brake'.
- A reinforced rectangular section **13** which will move inside the tubular section **7** and includes the upper brake consisting of projecting ledges **18** on both sides of the lower part of the rectangular section (13). These ledges project from one element coupled in the rectangular section **13** allowing for the necessary flexibility to permit unlocking (Fig. 6d) once downward force is exerted on the tubular section **13** through the handle. This tubular section **13** has the handle **14** at its top. The lower part of the rectangular section **13** will be fixed inside the upper brake and the upper part of this rectangular section will be fixed inside the handle **14.**

As can be seen in the figures, the basket 1 has one or more cutouts in the rear wall parallel to the telescopic set **6** in order to accommodate the lower brake.

Both parts of the lower brake have a configuration which is in tension and biased towards the wall of the tubular section which presents the cutouts or holes **11** so that the lower brake, when aligned with the cutout in the basket wall, is inserted and fixed within this opening locking the tubular section **7** at this position.

If rectangular reinforced section **13** with the upper brake fixed at its position keeps being pulled upwardly, the projected ledges in the upper brake move inside the deeper rectangular grooves **8** of the tubular section **7,** thus avoiding wear or a decrease in thickness. There is only contact between upper brake and tubular section **7** at the end, when ledges come out from the deeper rectangular grooves to be fixed at the openings. This avoids most of the wear and breakage, the adjustment being maintained between the parts.

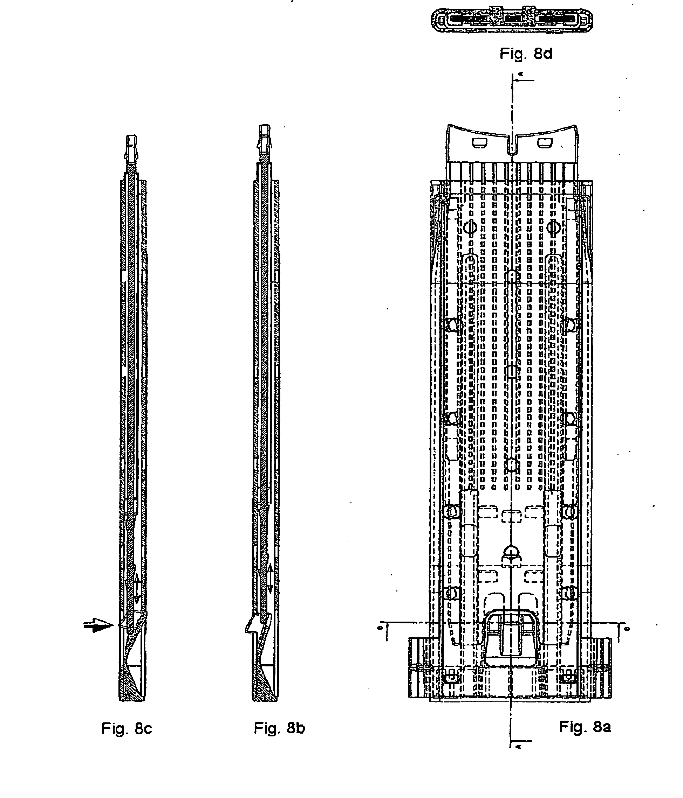

The telescopic set **6** with handle **14** is closed by firstly pushing and forcing projected ledges of the upper brake out of the holes in the tubular section. As the set keeps going down till the end of inner rectangular section, it will force the lower brake to depart from the inner wall, thereby releasing the lower brake from the basket (Fig. 8 section A1 - section A2). When at its resting point this brake will meet an inner hole so that the brake looses its tension.

As previously mentioned, another object of the invention is to design a handle **14** which may be considered as antimicrobial. Thus, and to avoid excessive costs in manufacturing said handle **14,** the upper part of the telescopic lifting set forming the handle is a part separate from the handle, so that during manufacturing this part can be made with an antibacterial additive, thereby helping to prevent bacterial growth in these environments. It is this part of the handle carrying the antibacterial additive where most of the contact is carried out; this way manufacturing becomes more economical.

The basket also features a transparent coupling panel **10** which fits over the front upper rim of the basket 1. This panel **10** will protect the printing on the upper edge or rim of the basket, or it has the logo or trademark printed on the rear part of the transparent panel thereby protecting the printing and being quickly replaced when damaged, without needing to replace the basket as a whole. This can help the retailer to have different sales promotions with different brands at minimal cost.

On the other hand, the steel or plastic shaft **19** of the wheel **3** that keeps said wheel in place is provided with a groove, or a portion of the shaft has a smaller diameter, and is kept in place by a downward force on that part of the basket acting as a spring. This force can be easily released by pressing the spring part of the basket, releasing the shaft and the wheel for an easier maintenance and cleaning or for replacement of the wheel.

The invention described above may undergo minor changes in details without departing from the scope of following claims.

## Claims

1. Basket (1) with wheels (3) of the type which is normally used for purchases at supermarkets and other retail outlets, being stackable and provided with a telescopic handle, **characterized in that** it comprises:
- a telescopic set (6) suitable to drive a handle (14) comprised by:
. a main tubular section (7) or structure with rectangular inner grooves (8) along most of its length and presenting holes (9) near one end of said main tubular section (7) suitable for accommodating and receiving part of one upper brake;
. a reinforced rectangular section (13) suitable for moving inside the main tubular section (7) and which includes said upper brake consisting of projecting ledges (18) on both sides of a lower part of the reinforced rectangular section (13), having the handle (14) at its top;
- a portion of said handle (14) made with an antibacterial additive;
- a transparent coupling panel (10) which fits over a front upper rim of the basket;
- a steel or plastic shaft (12) which keeps a wheel (3) in place, wherein this shaft (12) has a groove or a portion of the shaft (12) has a smaller diameter, and is suitable for being kept in place by a downward force on that part of the basket acting as a spring, wherein this force can be released by pressure to release the shaft (12) and the wheel (3);
wherein,
responsive to a continuing upward pull of the reinforced rectangular section (13) with the upper brake fixed at its position, the ledges (18) laterally projecting in the lower part of the wall of the reinforced rectangular section (13) are adapted to move inside the deeper rectangular grooves of the main tubular section (7).

2. Basket (1) with wheels (3) according to the preceding claim, **characterized in that** the main tubular section (7) further provides cutouts (11) at its upper end, suitable for accommodating and receiving the upper brake, which consists of ledges suitable for lodging into said cutouts (11) or holes (9).

3. Basket (1) with wheels (3) according to any of the preceding claims, **characterized in that** the lower part of the reinforced rectangular section (13) is suitable for being fixed when the telescopic set (6) is extended inside the upper brake.

4. Basket (1) with wheels (3) according to any of the preceding claims, **characterized in that** an upper part of the reinforced rectangular section (13) is fixed inside the handle (14).

5. Basket (1) with wheels (3) according to any of the claims 2-4, **characterized in that** the cutouts (11) of the main tubular section (7) are located in a rear wall parallel to the telescopic set (6), suitable to accommodate a lower brake.

6. Basket (1) with wheels (3) according to any of the preceding claims, **characterized in that** both parts of the lower brake have a configuration which is suitable to be in tension and biased towards the wall of the main tubular section (7), which presents the cutouts (11) or holes (9), so that the lower brake, when aligned with the cutout in the basket wall, is inserted and fixed within this opening locking the main tubular section (7) at this position.

7. Basket (1) with wheels (3) according to any of the preceding claims, **characterized in that** the telescopic set (6) is suitable to be closed by firstly pushing and forcing projected ledges (18) of the upper brake out of the holes (9) in the main tubular section (7) and, as the set keeps going down till the end of inner rectangular section, it will force the lower brake to depart from the inner wall, thereby releasing the lower brake from the basket.

8. Basket (1) with wheels (3) according to any of the preceding claims, **characterized in that** the transparent coupling panel which fits over the front upper rim of the basket (1) is provided with a logo or trademark printed on the rear part of the transparent panel thereby protecting the printing.

## Patentansprüche

1. Korb (1) mit Rädern (3), ähnelt den Körben, die normalerweise zum Kaufen in Supermärkten und anderen Einzelhandelsgeschäften verwendet werden, stapelbar und mit einem Teleskopgriff ausgestattet, **dadurch gekennzeichnet, dass** es folgendes enthält:
- ein Teleskop-Set (6), geeignet um einen Handgriff (14) zu bedienen, welches folgendes beinhaltet:
• ein rohrförmiges Hauptteil (7) oder eine Struktur mit rechteckigen, inneren Rillen (8) entlang des größten Teils ihrer Länge und mit Bohrungen (9) an einem Ende des besagten rohrförmigen Hauptteils, geeignet um Teile einer oberen Bremse aufzunehmen und anzupassen;
• ein verstärkter, rechteckiger Abschnitt (13), geeignet um im rohrförmigen Hauptteil (7) bewegt zu werden und welcher die besagte obere Bremse beinhaltet und diese wiederum vorspringende Kanten (18) auf beiden Seiten eines Unterteils des verstärkten, rechteckigen Abschnitts (13) aufweist, der Handgriff (14) befindet sich am Oberteil;
- ein Teil des besagten Handgriffs (14), welches aus einem antibakteriellen Zusatz angefertigt wird;
- eine durchsichtige Kopplungsplatte (10), welche über einen vorderen, oberen Rand des Korbes passt;
- eine Stahl - oder Plastikwelle (12), welche ein Rad (3) an der richtigen Stelle hält, worin diese Welle (12) eine Nut enthält oder ein Teil der Welle (12) einen kleineren Durchmesser hat und geeignet ist, um durch eine Abwärtskraft an dieser Stelle des Korbes gehalten zu werden und wie eine Feder wirkt, worin diese Kraft durch Druck freigegeben werden kann, um die Welle (12) und das Rad (3) zu lösen;
worin,
reaktionsschnell zu einem anhaltenden Ziehen des verstärkten, rechteckigen Abschnitts (13) mit der oberen Bremse in fester Position, die Kanten (18) seitlich am Unterteil der Wand des verstärkten, rechteckigen Abschnitts (13) vorspringend geeignet sind, um sich im Inneren der tieferen, rechteckigen Rillen des rohrförmigen Hauptteils (7) zu bewegen.

2. Korb (1) mit Rädern (3), nach vorhergendem Anspruch, **dadurch gekennzeichnet, dass** das rohrförmige Hauptteil (7) ebenfalls Ausschnitte (11) an seinem oberen Ende hat, geeignet, um die obere Bremse aufzunehmen und anzupassen, welche wiederum aus vorspringende Kanten besteht, die für das Einlegen in die besagten Ausschnitte (11) oder Bohrungen (9) geeignet sind.

3. Korb (1) mit Rädern (3), nach einem der vorhergenden Ansprüche, **dadurch gekennzeichnet, dass** das Unterteil des verstärkten, rechteckigen Abschnitts (13) für das Fixieren an das Teleskop-Set (6) geeignet ist, wenn dieses im Inneren der oberen Bremse ausgestreckt ist.

4. Korb (1) mit Rädern (3), nach einem der vorhergenden Ansprüche, **dadurch gekennzeichnet, dass** ein Oberteil des verstärkten, rechteckigen Abschnitts (13) im Inneren des Handgriffs (14) fixiert ist.

5. Korb (1) mit Rädern (3), nach Ansprüchen 2-4, **dadurch gekennzeichnet, dass** sich die Ausschnitte (11) des rohrförmigen Hauptteils (7) an einer Rückwand, parallel zum Teleskop-Set (6) befinden, geeignet, um eine untere Bremse aufzunehmen.

6. Korb (1) mit Rädern (3), nach einem der vorhergenden Ansprüche, **dadurch gekennzeichnet, dass** beide Teile der unteren Bremse eine Konfiguration haben, die geeignet ist, um Druck auszuhalten und gegen die Wand des rohrförmigen Hauptteils (7) vorspannt zu werden, dieses enthält die Ausschnitte (11) oder Bohrungen (9), sodass die untere Bremse, wenn nach dem Ausschnitt in der Korbwand ausgerichtet, innerhalb dieser Öffnung eingesetzt und fixiert wird und so das rohrförmige Hauptteil (7) in dieser Position verriegelt.

7. Korb (1) mit Rädern (3), nach einem der vorhergenden Ansprüche, **dadurch gekennzeichnet, dass** das Teleskop-Set (6) geschlossen werden kann, indem, erstens die vorspringenden Kanten (18) der oberen Bremse aus den Bohrungen (9) im rohrförmigen Hauptteil (7) geschoben und gedrückt werden und während das Set bis zum Ende des inneren rechteckigen Abschnitts sinkt, wird die untere Bremse gezwungen von der Innenwand abzufahren, dadurch wird die untere Bremse aus dem Korb freigesetzt.

8. Korb (1) mit Rädern (3), nach einem der vorhergenden Ansprüche, **dadurch gekennzeichnet, dass** die durchsichtige Kopplungsplatte, die über den vorderen, oberen Rand des Korbes (1) passt, ein Logo oder ein Warenzeichen aufweist, welches auf das Hinterteil dieser durchsichtigen Kopplungsplatte gedruckt ist und dadurch den Druck schützt.

## Revendications

1. Panier (1) à roulettes (3) du type utilisé normalement pour des achats dans les supermarchés et d'autres points de vente en détail, empilable et doté d'une poignée télescopique, **caractérisé en ce qu'**il comprend :
- un ensemble télescopique (6) apte à activer une poignée (14) et composé de :
. une section tubulaire principale (7) ou structure avec des rainures rectangulaires intérieures (8) le long de la majeure partie de sa longueur et avec des orifices (9) près d'une extrémité de ladite section tubulaire principale (7) aptes à loger et recevoir une partie d'un frein supérieur ;
. une section rectangulaire renforcée (13) susceptible de se déplacer à l'intérieur de la section tubulaire principale (7) et qui comprend ledit frein supérieur constitué par des bords saillants (18) sur les deux côtés d'une partie inférieure de la section rectangulaire renforcée (13), étant dotée de la poignée (14) au sommet ;
- une partie de ladite poignée (14) étant faite avec un additif antibactérien ;
- un panneau transparent (10) d'accouplement qui s'adapte à un cadre supérieur avant du panier ;
- un axe (12) en acier ou plastique qui maintient une roulette en place, où cet axe (12) présente une rainure ou une partie de l'axe (12) a un diamètre plus petit, étant maintenu en place par une force descendante sur la partie du panier qui agit comme un ressort, cette force pouvant être libérée par pression en vue de la libération de l'axe ( 12) et de la roulette (3) ;
dans lequel,
lorsque la section rectangulaire renforcée (13) avec le frein supérieur fixé dans sa position est tirée continûment vers le haut, les bords (18) qui saillent latéralement dans la partie inférieure de la paroi de la section rectangulaire renforcée (13) sont adaptés pour se déplacer dans les rainures rectangulaires plus profondes de la section tubulaire principale (7).

2. Panier (1) à roulettes (3) selon la revendication précédente, **caractérisé en ce que** la section tubulaire principale (7) est dotée également d'encoches (11) à son extrémité supérieure aptes à loger et recevoir le frein supérieur, qui présente des bords qui entrent dans les encoches (11) ou orifices (9) susdits.

3. Panier (1) à roulettes (3) selon l'une quelconque des revendications précédentes, **caractérisé en ce que** la partie inférieure de la section rectangulaire renforcée (13) est susceptible de se fixer lorsque l'ensemble télescopique (6) s'étend à l'intérieur du frein.

4. Panier (1) à roulettes (3) selon l'une quelconque des revendications précédentes, **caractérisé en ce qu'**une partie supérieure de la section rectangulaire renforcée (13) est fixée à l'intérieur de la poignée (14).

5. Panier (1) à roulettes (3) selon l'une quelconque des revendications 2 à 4, **caractérisé en ce que** les encoches (11) de la section tubulaire principale (7) sont situées dans une paroi arrière parallèle à l'ensemble télescopique (6), de façon à loger un frein inférieur.

6. Panier (1) à roulettes (3) selon l'une quelconque des revendications précédentes, **caractérisé en ce que** les deux parties du frein inférieur ont une configuration apte à être en tension et orientée vers la paroi de la section tubulaire principale (7), qui présente des encoches (11) ou des orifices (9) afin que le frein inférieur, lorsqu'il est aligné avec l'encoche dans la paroi du panier, s'insère et se fixe dans cette ouverture, en verrouillant la section tubulaire principale (7) dans cette position.

7. Panier (1) à roulettes (3) selon l'une quelconque des revendications précédentes, **caractérisé en ce que** l'ensemble télescopique (6) est susceptible d'être fermé d'abord en poussant et forçant les bords saillants (18) du frein supérieur à sortir des orifices (9) dans la section tubulaire principale (7) et, à mesure que l'ensemble continue à descendre jusqu'à la fin de la section rectangulaire intérieure, il forcera le frein inférieur à s'éloigner de la paroi intérieure, en desserrant ainsi le frein inférieur du panier.

8. Panier (1) à roulettes (3) selon l'une quelconque des revendications précédentes, **caractérisé en ce que** le panneau transparent (10) d'accouplement qui s'adapte au cadre supérieur avant du panier (1) présente un logo ou une marque imprimé sur la partie arrière du panneau transparent, protégeant ainsi l'impression.
